# EUROPEAN PATENT APPLICATION

(11) **EP 4 574 371 A1**
(43) Date of publication of application: **25.06.2025**
(21) Application number: 23854925.7
(22) Date of filing: 17.08.2023
(51) Int. Cl.: B27N 5/00, B43K 19/02

(54) **RECYCLED NATURAL MATERIAL**

(30) Priority: 19.08.2022 JP 2022130938
(71) Applicant: Mitsubishi Pencil Company, Limited, Tokyo 140-8537 (JP)
(72) Inventor: KUBO, Ryota, Fujioka-shi Gunma 375-0002 (JP); NONAKA, Hiroshi, Tsu-shi Mie 514-8507 (JP)
(74) Representative: Vossius & Partner Patentanwälte Rechtsanwälte mbB
(86) International application number: PCT/JP2023/029690
(87) International publication number: WO 2024/038891

(57) **Abstract**

A recycled natural material such as recycled wood that exhibits excellent cutting machinability without losing strength and water resistance, has less impact on the environment, can be easily manufactured, and contributes to the effect of solving the problem of resource depletion. Examples of the recycled natural material include those including, for example, at least an extender material comprising at least one type of powder derived from a biomass resource and having a particle size of 2 mm or less, a machinability-improving material comprising a thermoplastic solid having a melting point of 40°C or higher, and a binding material, wherein the extender material/the machinability-improving material/the binding material are in mass proportions of 20 to 65/15 to 55/10 to 50, and the recycled natural material is molded in a predetermined shape such as a rod shape, a plate shape, a tube shape, a block shape, or a sheet shape.

## Description

### Technical Field

The present specification relates to a recycled natural material such as recycled wood that exhibits excellent moldability and excellent cutting machinability after molding, as well as contributes to the effect of solving the problem of resource depletion.

### Background Art

Traditionally, as a substitute for wood, there has been proposed a material obtained by kneading an easily moldable material such as a resin and an extender material such as a clay mineral powder. For example, the following are known as a composite material suitable for extrusion molding, which improves drawdown and non-uniform flowability due to resin characteristics, as well as surface roughness of a molded product:
1) a composite material that is a composition containing a polyethylene (A) having specific physical properties, a cellulose-based powder (B), and a specific wax (C), having weight proportions within a range of (A) / (B) / (C) = 25 to 89/10 to 70/0.5 to 17.5 (total 100 parts by weight) (see, for example, Patent Document 1);
2) a wood-based molded body obtained by: adding water to a powdered crushed material that is obtained by heating and pressurizing a wood-based material in the presence of water vapor, then rapidly reducing the pressure to explodingly crush and dry it; and then mixing at least a fluid resin, a powdered wood-based material, and the crushed material to which water has been added to provide a homogeneous and good wood-based molded body through improved moldability, strength, and water resistance (see, for example, Patent Document 2); and
3) wood resin pellets consisting of 70 to 91 parts by weight of wood flour and 1 to 15 parts by weight of a wax material having a melting point between 40 and 100°C, as wood resin pellets that have low melt viscosity and excellent moldability, are capable of providing a molded product with a good appearance similar to that of natural wood, and are further capable of providing the molded product with reduced discoloration (scorching) that would occur during molding, and with excellent physical properties (see, for example, Patent Document 3) .

The composite materials, woody molded articles, woody resin pellets, and the like disclosed in Patent Documents 1 to 3 are made for the purpose of preventing scorching during molding and obtaining an appearance close to natural wood in addition to ease of molding. Ease of processing after molding such as ease of cutting and ease of slicing, however, is not taken into consideration. Further improvements and refinements have been desired at present. In addition, when a petroleum-derived material is used, the effect of solving the problem of resource depletion is poor.

### Citation List

### Patent Document

Patent Document 1: JP 2000-103915 A (Claims, Examples, etc.)
Patent Document 2: JP 2006-272696 A (Claims, Examples, etc.)
Patent Document 3: JP 2011-236410 A (Claims, Examples, etc.)

### Summary of Invention

### Technical Problem

The present disclosure is intended to solve the above-mentioned typical problems and the like of the related art. It has a object to provide a recycled natural material such as recycled wood that exhibits excellent cutting machinability without losing strength and water resistance, has less impact on the environment, can be easily manufactured, and contributes to the effect of solving the problem of resource depletion.

### Solution to Problem

As a result of intensive studies on the above-mentioned typical problems and the like of the related art, the inventors of the present disclosure have found that a recycled natural material of the above-mentioned object can be obtained by molding at least an extender material comprising a powder derived from a biomass resource and having a particle size of a specific value or less, a machinability-improving material comprising a thermoplastic solid having specific physical properties, and a binding material in predetermined proportions, and molding the same into a predetermined shape, whereby the present disclosure has been completed.

In other words, the recycled natural material of the present disclosure contains at least an extender material comprising at least one type of powder derived from a biomass resource and having a particle size of 2 mm or less, a machinability-improving material comprising a thermoplastic solid having a melting point of 40°C or higher, and a binding material, wherein a mass proportion of the extender material/the machinability-improving material/the binding material is 20 to 65 / 15 to 55 / 10 to 50, and the recycled natural material is molded in a predetermined shape.

The machinability-improving material preferably has a natural origin index defined by ISO 16128 of 50% or more.

The binding material is preferably cellulose or a cellulose derivative. The cellulose derivative is preferably ammonium carboxymethyl cellulose.

The recycled natural material is preferably molded into a rod shape to make a rod-shaped recycled natural material, and the rod-shaped recycled natural material is preferably further processed to make a wood shaft for a writing instrument or a pencil.

### Advantageous Effects of Invention

According to the present disclosure, it is provided a recycled natural material such as recycled wood that exhibits excellent cutting machinability without losing strength and water resistance, has less impact on the environment, can be easily manufactured, and contributes to the effect of solving the problem of resource depletion.

The object and effects of the present disclosure can be recognized and obtained especially using the components and combinations indicated in the claims. Both general explanation described above and detailed explanation described below are exemplary and explanatory and do not limit the present disclosure described in claims.

### Description of Embodiments

Hereinafter, embodiments of the present disclosure will be described in detail. Note that the technical scope of the present disclosure is not limited to the embodiment described below but includes the invention described in Claims and equivalents thereof. In addition, the present disclosure can be implemented based on the contents disclosed in the present specification and technical common knowledge (including design matters and obvious matters) in the art.

The recycled natural material of the present disclosure includes at least an extender material comprising at least one type of powder derived from a biomass resource and having a particle size of 2 mm or less, a machinability-improving material comprising a thermoplastic solid having a melting point of 40°C or higher, and a binding material, wherein a mass proportion of the extender material/the machinability-improving material/the binding material is20 to 65 / 15 to 55 / 10 to 50, and the recycled natural material is molded in a predetermined shape.

The extender material used in the present disclosure comprises at least one type of powder selected from those derived from biomass resources and having a particle size of 2 mm or less.

As the biomass resource in the present disclosure, for example, any of waste resources, unused resources, and production resources described and classified in NEDO (New Energy and Industrial Technology Development Organization) Renewable Energy Technology White Paper is used.Unspecificly, waste resources and unused resources are suitably used because they are used for limited applications and the utilization of the same has a large advantage. Among the waste resources and unused resources, woody biomass, food waste, and agricultural residue biomass are preferable from the viewpoint of ease of obtaining powder or pulverizing processing.

As the woody biomass, trees and bamboos such as sawmill residual materials, construction waste wood, forest land residual materials and thinned woods, and unused trees are used.

Examples of the trees include, but are not limited to, naturally derived trees such as large-leaved trees and coniferous trees. Specific examples of the trees include cedar, pine, larch, red pine, Sakhalin Fir, cypress, beech, horse chestnut, Quercus serrata, Quercus crispula, oak, Japanese linden, birch, Japanese Elm, lauan, and Western hemlock. In particular, cedar, cypress, beech, horse chestnut, Quercus crispula, and the like are particularly suitably used because they are easily available. Examples of the bamboo described above include naturally occurring Phyllostachys bambusoides (Madake bamboo), Phyllostachys edulis (Moso bamboo), Lophatherum gracile (Hachiku bamboo), Phyllostachys aurea (Hoteichiku bamboo), Kikko bamboo, Bambusa (Horaichiku bamboo), Semiarundinaria fastuosa (Narihiradake bamboo), Sasa kurilensis (Chishima sasa), Sinobambusa tootsik (Touchiku bamboo), Shiho bamboo, Chimonobambusa marmorea (Kanchiku bamboo), Pseudosasa (Yadake bamboo), and Arundinaria (Medake bamboo). Phyllostachys edulis (Moso bamboo) or the like is preferably used because it accumulates a large amount and is easily available.

Examples of the food waste that can be used include food waste generated during the sorting and manufacturing of food ingredients, kitchen waste, etc., and are not particularly limited. However, when it comes to distinguishing between edible and inedible parts, it is preferable to use inedible parts due to their lack of versatility. Specific examples of the inedible part of the food waste include tea leaves, coffee grounds, peach shells, walnut shells, corn cobs, and vegetable skins, seeds, or cores.

As the agricultural residue biomass, rice straw, wheat straw, rice husk, bagasse, cacao husk or the like is used.

In the extender material used in the present disclosure, a powder obtained by mixing a plurality of powders derived from the biomass resources can also be used as long as it has a particle size of 2 mm or less. The particle size in the present disclosure can be a value obtained by passing through a sieve or mesh having an arbitrary opening size.

A powder with a particle size exceeding 2 mm is undesirable because they cause unevenness on the surface of a molded product of the recycled natural material, marring the appearance thereof, and causing cracks at the time of drying after molding.

Examples of the at least one type of powder to be used, selected from those having a particle size of 2 mm or less and being derived from the biomass resources, include wood flour obtained from sawdust, mill ends, wood waste, etc., and powder obtained by pulverization and classification using an arbitrary apparatus, and the like, of woody biomass, food waste, and agricultural residue biomass, derived from the waste resources and unused resources.

The at least one type of powder (including mixed powders) selected from those having a particle size of 2 mm or less and being derived from each of biomass resources, has a natural origin index (excluding water) defined by ISO 16128 of 0.5 or more, more preferably 0.7 or more, from the viewpoint of further exhibiting the effect of the present disclosure and from the viewpoint of impact on the environment. With this configuration, an extremely low impact on the environment, and further contribution to the effect of solving the problem of resource depletion, can be achieved.

The content of the powders derived from these biomass resources is desirably 20 to 65 mass%, more preferably 30 to 65 mass%, and particularly preferably 35 to 55 mass%, with respect to the total amount of the recycled natural material, from the viewpoint of reduction in the impact on the environment mainly based on the amount of carbon dioxide emission and the dimensional accuracy and strength of the recycled natural material.

When the content thereof is less than 20 mass%, shrinkage during drying may be large, and the dimensional accuracy of the recycled natural material may be poor and the impact on the environment may be increased. On the other hand, when the content thereof is more than 65 mass%, the strength of the recycled natural material may be poor.

The machinability-improving material used in the present disclosure is selected from at least one type of thermoplastic solids having a melting point of at least 40°C or higher.

The machinability-improving material comprising a thermoplastic solid used in the present disclosure is not particularly limited as long as it is a wax, a fatty acid, a derivative thereof, or a thermoplastic resin, having a melting point of 40°C or higher.

Examples of the wax having a melting point of 40°C or higher include vegetable waxes such as candelilla wax, carnauba wax, rice wax, Japan wax, and jojoba oil; animal waxes such as beeswax, lanolin, and spermaceti; mineral waxes such as montan wax, ozokerite, and ceresin; petroleum waxes such as paraffin wax, microcrystalline wax, and petrolatum; synthetic hydrocarbons such as Fischer-Tropsch wax, polyethylene wax, and amide wax; modified waxes such as montan wax derivatives, paraffin wax derivatives, and microcrystalline wax derivatives; and hydrogenated waxes such as hydrogenated castor oil, hydrogenated castor oil derivatives, and hydrogenated palm oil.

Carnauba wax is a wax extracted and refined from the leaves of carnauba palm tree, and the grades thereof have been traditionally classified into grades: No. 1 for a pale yellow wax collected from young leaves; and No. 2 (or No. 3) for a pale brown wax collected from old leaves.

Examples of fatty acids or derivatives thereof having a melting point of 40°C or higher include fatty acids such as myristic acid, stearic acid, and behenic acid; fatty acid salts of these fatty acids, such as sodium, calcium, and magnesium salts; fatty acid esters such as stearyl stearate, glycerin monostearate, glycerin distearate, sorbitan monostearate, sorbitan tristearate, and polyethylene glycol distearate; and fatty acid amides such as stearic acid amide.

Examples of the thermoplastic resin having a melting point of 40°C or higher include polyethylene and polypropylene.

These machinability-improving materials comprising thermoplastic solids can be used alone or in combination of two or more (hereinafter, referred to as "at least one type") . If commercial products are available, they can be used.

As the machinability-improving material comprising a thermoplastic solid to be used, a thermoplastic solid having a melting point of 60°C or higher and 150°C or lower is preferably used, and a wax or a grease having a melting point of 75°C or higher and 120°C or lower is more preferably used, from the viewpoint of ease of combining with a powder derived from a biomass resource, and excellent strength of a recycled natural material.

Preferable examples of the machinability-improving material comprising a thermoplastic solid include carnauba wax, rice wax, candelilla wax, hydrogenated castor oil, glycerin monostearate, glycerin distearate, sorbitan monostearate, and sorbitan tristearate.

If the melting point of the thermoplastic solid such as a wax or a grease used is lower than 40°C, the recycled natural material is softened by the temperature caused by external factors such as the environment and friction during use, and the strength is lowered, which is not preferable.

These machinability-improving materials comprising thermoplastic solids having a melting point of 40°C or higher preferably have a natural origin index (excluding water) defined by ISO 16128 of 0.5 or more from the viewpoint of further exhibiting the effects of the present disclosure and from the viewpoint of an impact on the environment. The term "natural origin index (excluding water)" in the present disclosure (including Examples described below) refers to an index expression according to ISO 16128, and when the natural origin index (excluding water) is 0.5 or more, more preferably 0.8 or more, an extremely low impact on the environment, and further contribution to the effect of solving the problem of resource depletion, can be achieved. In addition, the machinability-improving material comprising the thermoplastic solid preferably has a penetration (25°C) of 50 or less from the viewpoint of further exhibiting the effects of the present disclosure, particularly from the viewpoint of improving strength.

The penetration (25°C) in the present disclosure is defined by JIS K2235 5.4. When the penetration is 50 or less, more preferably 10 or less, a high-strength recycled natural material having machinability is obtained. From this point of view, carnauba wax, rice wax, candelilla wax, hydrogenated castor oil and the like are preferably used as the machinability-improving material comprising the thermoplastic solid.

The total content of the machinability-improving materials comprising thermoplastic solids is 15 to 55 mass%, more preferably 15 to 50 mass%, and particularly preferably 15 to 40 mass% with respect to the total amount of the recycled natural material from the viewpoint of dimensional accuracy and cutting machinability of the recycled natural material.

When the content thereof is less than 15 mass%, shrinkage is large at the time of drying after molding, and there is a possibility that dimensional accuracy is lowered, and cutting machinability of the recycled natural material is poor in some cases. On the other hand, when the content thereof exceeds 55 mass%, aggregation occurs at the time of mixing with powder of an extender material or a binding material, and uneven distribution of components is caused in some cases, which is not preferable.

The binding material used in the present disclosure is preferably water-soluble or hydrophilic. For example, at least one type of cellulose fiber (including nanofiber), methyl cellulose, carboxymethyl cellulose (CMC) or a salt thereof, hydroxymethylpropyl cellulose, sodium alginate, polyvinyl alcohol, polyoxyethylene, polyacrylamide, maleic acid copolymer resin, or the like can be used. Examples of the salt of each kind of carboxymethyl cellulose (CMC) described above include sodium salts, ammonium salts, and calcium salts thereof. The binding material is preferably of natural origin, and further, the naturally-derived binding material is preferably ammonium carboxymethyl cellulose (CMC) from the viewpoint of imparting water resistance.

These binding materials preferably have a natural origin index (excluding water) defined by ISO 16128 of 0.5 or more, more preferably 0.7 or more, from the viewpoint of further exhibiting the effect of the present disclosure and from the viewpoint of impact on the environment. With this configuration, an extremely low impact on the environment, and further contribution to the effect of solving the problem of resource depletion, can be achieved.

The content of the binding material is preferably 10 to 50 mass%, more preferably 20 to 50 mass%, and particularly preferably 30 to 45 mass% with respect to the total amount of the recycled natural material. When the content of the binding material is less than 10 mass%, moldability may be poor, and the shape cannot be maintained during drying, and the strength of the recycled natural material may be insufficient. On the other hand, when the content exceeds 50 mass%, the recycled natural material becomes hard, and cutting machinability may be poor.

The recycled natural material in the present disclosure contains an extender material comprising at least one type of powder (including mixed powder) selected from those having a particle size of 2 mm or less and being derived from the biomass resources, and a machinability-improving material comprising a thermoplastic solid having a melting point of 40°C or higher, and as described above, the content proportions of the extender material/machinability-improving material/binding material in the total amount is set to the proportion of 20 to 65 / 15 to 55 / 10 to 50, preferably proportion of 30 to 65 / 15 to 50 / 20 to 50, and more preferably proportion of 35 to 55 / 15 to 40 / 30 to 45 on a mass basis (mass%) . In addition to this, from the viewpoint of further exerting the effect of the present disclosure and imparting water resistance, the recycled natural material can further contain a crosslinking agent that crosslinks the binding material.

The crosslinking agent for crosslinking the binding material is preferably an agent having a carboxylic acid group that ester-crosslinks the binding material. Specific examples thereof include succinic acid, malic acid, maleic acid, tartaric acid, citric acid, and polyacrylic acid.

The content of the crosslinking agent is preferably 0.1 to 5 mass%, and more preferably 0.5 to 2 mass% relative to the total amount of the recycled natural material, from the viewpoint of exhibiting water resistance, suppressing a decrease in strength due to moisture absorption, and suppressing discoloration of the material.

Furthermore, the recycled natural material of the present disclosure may appropriately contain a colorant (a dye, an inorganic pigment, an organic pigment) for coloring the recycled natural material, iron oxide, zinc oxide, titanium oxide, carbon black, a natural pigment, and the like, as necessary, in addition to the extender material comprising at least one type of powder (including mixed powder) selected from those having a particle size of 2 mm or less and being derived from the biomass resources, the machinability-improving material comprising a thermoplastic solid having a melting point of 40 °C or higher, the binding material, and the crosslinking agent.

These recycled natural materials preferably have a natural origin index (excluding water) of 0.5 or more from the viewpoint of further exhibiting the effects of the present disclosure and from the viewpoint of an impact on the environment.

By setting the natural origin index (excluding water) of the recycled natural material to 0.75 or more, more preferably 0.85 or more, further, a recycled natural material having an remarkably low impact on the environment can be obtained.

Setting the natural origin index (excluding water) of the recycled natural material to 0.75 or more can be achieved by appropriately selecting naturally-derived products as the thermoplastic solid having a melting point of 40°C or higher and the binding material.

The recycled natural material of the present disclosure can be obtained as a target by: mixing an extender material comprising at least one type of powder (including mixed powder) selected from those having a particle size of 2 mm or less and being derived from the biomass resources, a machinability-improving material comprising a thermoplastic solid having a melting point of 40°C or higher, and a binding material in the above-described proportion; adding water to the mixture while stirring; molding the mixture into a predetermined shape as a molding precursor; and drying the molding precursor. For example, an extender material comprising at least one type of powder (including mixed powder) selected from those having a particle size of 2 mm or less and being derived from the biomass resources, a machinability-improving material comprising a thermoplastic solid having a melting point of 40 °C or higher, and a binding material are mixed by using a kneading machine such as a Henschel mixer, a planetary mixer, or a kneader; thereafter water (purified water, distilled water, etc.) is added thereto so as to have a moisture content of 40 to 80% while stirring to obtain a molding precursor, then the molding precursor is molded into a predetermined shape, for example, a rod shape, a plate shape, a tube shape, a block shape, or a sheet shape, and dried, whereby a targeted recycled natural material can be produced.

In addition, the kneaded product is molded into a rod shape, a round bar, a plate shape, or a sheet shape using an extrusion-molding machine or the like with a die or a T-die having a predetermined diameter and then dried to produce a molded body of a predetermined shape. Further, physical properties (including porosity) of a recycled natural material can be widely controlled by suitable selection of pressure in the extrusion-molding, water content, and a combination of an extender material comprising each powder (wood flour or the like) derived from biomass resources, a machinability-improving material comprising a thermoplastic solid derived from natural resources, a binding material, and the like at the time of extrusion molding or the like, so that a recycled natural material satisfying desired texture, strength, and moldability is obtained.

In the present disclosure, the form, application and the like of the recycled natural material are not particularly limited. For example, when the recycled natural material is formed into a rod shape, the rod-shaped recycled natural material may be further processed into a wood shaft for a writing instrument or a pencil. Further, examples of the recycled natural material include various recycled natural materials used for applications such as wood shafts for cosmetics such as an eyeliner, an eyebrow, and an eyeshadow, various containers, diaphragms and housings of acoustic devices, and automobile interior parts.

The recycled natural material of the present disclosure having such a configuration exhibits excellent cutting machinability without losing strength and water resistance, has less impact on the environment, can be easily manufactured, and contributes to the effect of solving the problem of resource depletion. Thus, the recycled natural material such as a recycled wood, and a method for manufacturing the same, are provided.

The recycled natural material molded into a rod shape and further processed into a wood shaft for a writing instrument or a pencil has a propertyof cutting, drop resistance, and water resistance as good as a conventional wood shaft, and has a low impact on the environment. A known molding machine or the like used for molding a pencil or a writing instrument (including cosmetics with wood shafts) can be used without modification, and thus, a wood shaft for a writing instrument or a pencil that can be easily manufactured can be obtained.

### Examples

Herein after, the present disclosure will be described using Examples and Comparative Examples, but the present disclosure is not limited to these Examples.

### (Example 1)

A Henschel mixer was charged with: cypress-wood flour having a particle size of 2 mm or less obtained from a sawmill residual material as the biomass resources; an equal amount of powder of Carnauba Wax No. 2 (melting point: 82°C, penetration degree (25°C): less than 1, manufactured by Toyochem Co., Ltd., the same shall apply hereinafter) as the thermoplastic solid that was a machinability-improving material; and an equal amount to the wood flour of sodium carboxymethyl cellulose (CMC) (manufactured by Nippon Paper Industries Co., Ltd., the same shall apply hereinafter) as the binding material. The mixture was mixed in a dry state by the Henschel mixer. Then, purified water in an equal amount to the content was added to the Henschel mixer while stirring to obtain a molding precursor.

This molding precursor was molded into a rod shape having a diameter of 8 mm and a length of 180 mm by an extrusion-molding machine, and then dried at 50°C to obtain a rod-shaped recycled wood having a diameter of 7 mm.

### (Example 2)

A rod-shaped recycled wood having a diameter of 7 mm and a length of 180 mm was obtained in the same manner as in Example 1 except that ammonium carboxymethyl cellulose (CMC ammonium) (manufactured by Nichirin Chemical Industries, Ltd., the same applies hereinafter) was used instead of CMC sodium used in Example 1, and heating was performed at 150°C for 1 hour after drying.

### (Example 3)

A rod-shaped recycled wood having a diameter of 7 mm and a length of 180 mm was obtained in the same manner as in Example 1 except that polyvinyl alcohol (PVA) (manufactured by Kuraray Co., Ltd.) was used instead of CMC sodium used in Example 1.

### (Example 4)

A rod-shaped recycled wood having a diameter of 7 mm and a length of 180 mm was obtained in the same manner as in Example 2 except that cypress-wood flour having a particle size of 1 mm or less obtained from a sawmill residual material was used as the biomass resources in place of the cypress-wood flour used in Example 2.

### (Example 5)

A rod-shaped recycled wood having a diameter of 7 mm and a length of 180 mm was obtained in the same manner as in Example 4 except that a half amount of CMC ammonium used in Example 4 was replaced with cellulose fiber (CF) (manufactured by Nippon Paper Industries Co., Ltd.).

### (Example 6)

A rod-shaped recycled wood having a diameter of 7 mm and a length of 180 mm was obtained in the same manner as in Example 2 except that cedar-wood flour having a particle size of 0.6 mm or less obtained from thinned woods was used as the biomass resources instead of the cypress-wood flour used in Example 2.

### (Example 7)

A rod-shaped recycled wood having a diameter of 7 mm and a length of 180 mm was obtained in the same manner as in Example 2 except that cedar-wood flour having a particle size of 0.3 mm or less obtained from thinned woods was used as the biomass resources instead of the cypress-wood flour used in Example 2.

### (Example 8)

A rod-shaped recycled wood having a diameter of 7 mm and a length of 180 mm was obtained in the same manner as in Example 7 except that the amount of Carnauba Wax No. 2 was two thirds of the amount of the wood flour used in Example 7.

### (Example 9)

A rod-shaped recycled wood having a diameter of 7 mm and a length of 180 mm was obtained in the same manner as in Example 7 except that the amount of Carnauba Wax No. 2 was half of the amount of the wood flour used in Example 7.

### (Example 10)

A rod-shaped recycled wood having a diameter of 7 mm and a length of 180 mm was obtained in the same manner as in Example 7 except that the amount of Carnauba Wax No. 2 was four thirds of the amount of the wood flour used in Example 7.

### (Example 11)

A rod-shaped recycled wood having a diameter of 7 mm and a length of 180 mm was obtained in the same manner as in Example 7 except that the amount of CMC ammonium was four thirds of the amount of the wood flour used in Example 7.

### (Example 12)

A rod-shaped recycled wood having a diameter of 7 mm and a length of 180 mm was obtained in the same manner as in Example 7 except that the amount of CMC ammonium was two thirds of the amount of the wood flour used in Example 7.

### (Example 13)

A rod-shaped recycled wood having a diameter of 7 mm and a length of 180 mm was obtained in the same manner as in Example 7 except that the amount of Carnauba Wax No. 2 was one third of the amount of the wood flour and the amount of CMC ammonium was two thirds of the amount of the wood flour each used in Example 7.

### (Example 14)

A rod-shaped recycled wood having a diameter of 7 mm and a length of 180 mm was obtained in the same manner as in Example 2 except that bamboo flour having a particle size of 0.1 mm or less obtained from unused bamboo was used as the biomass resources instead of the cypress-wood flour used in Example 2.

### (Example 15)

A rod-shaped recycled wood having a diameter of 7 mm and a length of 180 mm was obtained in the same manner as in Example 14 except that the amount of Carnauba Wax No. 2 was half of the amount used in Example 14.

### (Example 16)

A rod-shaped recycled wood having a diameter of 7 mm and a length of 180 mm was obtained in the same manner as in Example 2 except that cacao husk pulverized powder having a particle size of 0.6 mm or less obtained from agricultural residues was used as the biomass resources instead of the cypress-wood flour used in Example 2.

### (Example 17)

A rod-shaped recycled wood having a diameter of 7 mm and a length of 180 mm was obtained in the same manner as in Example 4 except that rice wax (melting point: 79°C, penetration degree (25°C): 5, manufactured by Boso oil and fat Co., Ltd.) was used instead of Carnauba Wax No. 2 used in Example 4.

### (Example 18)

A rod-shaped recycled wood having a diameter of 7 mm and a length of 180 mm was obtained in the same manner as in Example 4 except that Fischer-Tropsch wax (melting point: 113°C, penetration degree (25°C): 1, manufactured by Nippon Seiro Co., Ltd.) was used instead of Carnauba Wax No. 2 used in Example 4.

### (Example 19)

A rod-shaped recycled wood having a diameter of 7 mm and a length of 180 mm was obtained in the same manner as in Example 4 except that glycerin mono,di-stearate (melting point: 63°C, penetration degree (25°C): 20, manufactured by Riken Vitamin Co., Ltd.) was used instead of Carnauba Wax No. 2 used in Example 4.

### (Example 20)

A rod-shaped recycled wood having a diameter of 7 mm and a length of 180 mm was obtained in the same manner as in Example 4 except that sorbitan tristearate (melting point: 54°C, penetration degree (25°C): 5, manufactured by Kao Corporation) was used instead of Carnauba Wax No. 2 used in Example 4.

### (Example 21)

A rod-shaped recycled wood having a diameter of 7 mm and a length of 180 mm was obtained in the same manner as in Example 4 except that stearic acid amide (melting point: 102°C, penetration degree (25°C) : 12, manufactured by Mitsubishi Chemical Corporation) was used instead of Carnauba Wax No. 2 used in Example 4.

### (Example 22)

A rod-shaped recycled wood having a diameter of 7 mm and a length of 180 mm was obtained in the same manner as in Example 4 except that stearic acid (melting point: 66°C, penetration degree (25°C) : 18, manufactured by NOF Corporation) was used instead of Carnauba Wax No. 2 used in Example 4.

### (Example 23)

A rod-shaped recycled wood having a diameter of 7 mm and a length of 180 mm was obtained in the same manner as in Example 4 except that high density polyethylene (melting point: 126°C, penetration degree (25°C) : less than 1, manufactured by Japan Polyethylene Corporation) was used instead of Carnauba Wax No. 2 used in Example 4.

### (Comparative Example 1)

A Henschel mixer was charged with the same cypress-wood flour having a particle size of 1 mm or less as that in Example 4 above, and the same CMC sodium as that in Example 1 above in an amount equivalent to the wood flour, and the mixture was mixed in a dry state. Thereafter, purified water in an amount equivalent to the content was added while stirring to obtain a molding precursor.

This molding precursor was molded into a rod shape having a diameter of 8.5 mm by an extrusion-molding machine, and then dried at 50°C to obtain a rod-shaped recycled wood having a diameter of 7 mm and a length of 180 mm.

### (Comparative Example 2)

A rod-shaped recycled wood having a diameter of 7 mm and a length of 180 mm was obtained in the same manner as in Example 2 except that CMC ammonium was used instead of CMC sodium used in Comparative Example 1, and the rod-shaped recycled wood was heated at 150°C for one hour after the drying.

### (Comparative Example 3)

A rod-shaped recycled wood having a diameter of 7 mm and a length of 180 mm was obtained in the same manner as in Comparative Example 2 except that half the amount of CMC ammonium was used relative to the amount of wood flour in Comparative Example 2.

### (Comparative Example 4)

A rod-shaped recycled wood having a diameter of 7 mm and a length of 180 mm was obtained in the same manner as in Comparative Example 3 except that one fourth the amount of CMC ammonium was used relative to the amount of wood flour in Comparative Example 3.

For each of the rod-shaped recycled woods of Examples 1 to 23 and Comparative Examples 1 to 4 obtained as described above, the natural origin index was calculated from the following, and the breakage strength, cutting machinability, and water resistance were evaluated by the following measurement methods.

These evaluation results are indicated in Table 1 below. Further, the blending proportions of the extender material, machinability-improving material, and binding material used in Examples 1 to 23 and Comparative Examples 1 to 4 (16.7%, 33.3%, and 66.7% in Table 2 represent 1/6, 1/3, and 2/3, respectively) and the natural origin indexes are shown in Table 2 below.

### (Natural Origin Index)

The natural origin index (excluding water) of each of the rod-shaped wood pieces obtained in Examples 1 to 23 and Comparative Examples 1 to 4 is obtained by calculating composition proportions in percentage using a weight excluding water of a natural raw material and a naturally-derived portion in a naturally-derived raw material defined in ISO 16128 from weight proportions of raw materials blended in the rod-shaped wood piece. The higher this value is, the higher the proportion of an animal- or plant-derived materialis, and the smaller an amount of a petroleum-derived material used is. It indicates that impact on the environment is low.

### (Method for evaluating breakage strength)

A load was applied in the direction of 90°C at a position of 80 mm from the position where each rod-shaped wood piece or the like obtained was fixed, and the maximum load at the moment of breakage was measured to evaluate the breakage strength (N).

### (Method for evaluating cutting torque)

For each of the rod-shaped wood pieces obtained, after the tip was trimmed to have a diameter of 2 mm using a pencil sharpener, the side opposite to the pencil sharpener was rotated by a machine to perform cutting until the wood piece became sharp by use of a pencil sharpener mounted on a fixture connected to a rotation moment measuring apparatus. A peak value (N·mm) of a rotation moment during this performance was measured and evaluated for a cutting torque.

### (Cutting machinability determination)

From the results of the breakage strength and the cutting torque, the balance between strength and machinability required at the cutting was determined on the basis of the following indices.

### Evaluation index:

Good: Breakage strength is equal to or greater than 12 N and cutting torque is less than 100 N · mm
Hard: Cutting torque is 100 N · mm or more
Weak: Breakage strength is less than 12 N

### (Method for evaluating water resistance)

Each rod-shaped wood piece thus obtained was immersed in water, and whether or not it has water resistance was evaluated based on whether or not the shape was maintained after 24 hours.

**[Table 1]**

| | Materials used (blending proportions shown in Table 2) | | | Evaluated Items | | | | |
|---|---|---|---|---|---|---|---|---|
| | Extender material | Machinability-improving material | Binding material | Natural origin Index | Breakage strength | Cutting torque | Cutting machinability datermination | Water resistance |
| | (Biomass resource) | (Thermoplastic solid) | | (Table 2) | [N] | [N · mm] | | |
| Example 1 | 2 mm Cypress | Camauba Wax No. 2 | CMC sodium | 0.93 | 19 | 86 | Good | No |
| Example 2 | 2 mn Cypress | Carpauba Wax No. 2 | CMC ammonium | 0.92 | 18 | 85 | Good | Yes |
| Example 3 | 2 mm Cypress | Carnauba Wax No. 2 | PVA | 0.67 | 16 | 88 | Good | No |
| Example 4 | 1 mm Cypress | Carnauba Wax No. 2 | CMC ammonium | 0.92 | 23 | 94 | Good | Yes |
| Example 5 | 1 mm Cypress | Carnauba Wax No. 2 | CMC ammonium+ CF (cellulose fibers) | 0.96 | 24 | 95 | Good | Yes |
| Example 6 | 0.6 mmCedar | Carnauba Wax No. 2 | CMC ammonium | 0.92 | 20 | 87 | Good | Yes |
| Example 7 | 0.3 mmCedar | Carnauba Wax No. 2 | CMC ammonium | 0.92 | 17 | 82 | Good | Yes |
| Example 8 | 0.3 mmCedar | Carnauba Wax No. 2 | CMC ammonium | 0.91 | 19 | 90 | Good | Yes |
| Example 9 | 0.3 mmCedar | Carnauba Wax No. 2 | CMC anmmonim | 0.90 | 24 | 99 | Good | Yes |
| Example 10 | 0.3 mm Cedar | Carnauba Wax No. 2 | CMC ammonium | 0.93 | 15 | 78 | Good | Yes |
| Example 11 | 0.3 mmCedar | Carnauba Wax No. 2 | CMC ammonium | 0.90 | 25 | 98 | Good | Yes |
| Example 12 | 0.3 mmCedar | Carnauba Wax No. 2 | CMC ammonium | 0.94 | 17 | 87 | Good | Yes |
| Example 13 | 0.3 mm Cedar | Carmuba Wax No. 2 | CMC ammonium | 0.92 | 16 | 92 | Good | Yes |
| Example 14 | 0.1 mm bamboo | Carnauba Wax No. 2 | CMC ammonium | 0.92 | 23 | 86 | Good | Yes |
| Example 15 | 0.1 mm bamboo | Carnauba Wax No. 2 | CMC ammonium | 0.90 | 25 | 90 | Good | Yes |
| Example 16 | 0.6 mm cocoa husk | Carnauba Wax No. 2 | CMC ammonium | 0.92 | 20 | 95 | Good | Yes |
| Example 17 | 1 mm Cypress | Rice wax | CMC ammonium | 0.92 | 21 | 92 | Good | Yes |
| Example 18 | 1 mm Cypress | Fischer-Tropsch wax | CMC ammonium | 0.59 | 20 | 94 | Good | Yes |
| Example 19 | 1 mm Cypress | Glycerin mono-distearate | CMC ammonium | 0.84 | 16 | 80 | Good | Yes |
| Example 20 | 1 mm Cypress | Sorbian tristearate | CMC ammonium | 0.87 | 18 | 84 | Good | Yes |
| Example 21 | 1 mm Cypress | Steart acid amide | CMC ammonium | 0.89 | 16 | 80 | Good | Yes |
| Example 22 | 1 mm Cypress | Stearic acid | CMC ammonium | 0.92 | 18 | 90 | Good | Yes |
| Example 23 | 1 mm Cypress | High-dersity polyethylene | CMC ammonium | 0.59 | 16 | 86 | Good | Yes |
| Comparative Example 1 | 1 mm Cypress | - | CMC sodium | 0.90 | 28 | 148 | Hard | No |
| Comparative Example 2 | 1 mm Cypress | - | CMC ammonium | 0.88 | 25 | 138 | Hard | Yes |
| Comparative Example 3 | 1 mm Cypress | - | CMC ammonium | 0.92 | 16 | 108 | Hard | Yes |
| Comparative Example 4 | 1 mm Cypress | - | CMC ammonium | 0.95 | 10 | 84 | Weak | Yes |

**[Table 2]**

| | Material composition blending proportions (mass basis) | | | Natural origin index | | | |
|---|---|---|---|---|---|---|---|
| | Extender material | Machinability-improving material | Binding material | Extender material | Machiability-improving material | Binding material | Total |
| | Biomass resources | Thermoplastic solid | | Biomass resources | Thermoplastic solid | | |
| Example 1 | 33.3% | 33.3% | 33.3% | 1.00 | 1.00 | 0.79 | 0.93 |
| Example 2 | 33.3% | 33.3% | 33.3% | 1.00 | 1.00 | 0.76 | 0.92 |
| Example 3 | 33.3% | 33.3% | 33.3% | 1.00 | 1.00 | 0.00 | 0.67 |
| Example 4 | 33.3% | 33.3% | 33.3% | 1.00 | 1.00 | 0.76 | 0.92 |
| Example 5 | 33.3% | 33.3% | 33.3% | 1.00 | 1.00 | 0.88 | 0.96 |
| Example 6 | 33.3% | 33.3% | 33.3% | 1.00 | 1.00 | 0.76 | 0.92 |
| Example 7 | 33.3% | 33.3% | 33.3% | 1.00 | 1.00 | 0.76 | 0.92 |
| Example 8 | 37.5% | 25.0% | 37.5% | 1.00 | 1.00 | 0.76 | 0.91 |
| Example 9 | 40.0% | 20.0% | 40.0% | 1.00 | 1.00 | 0.76 | 0.90 |
| Example 10 | 30.0% | 40.0% | 30.0% | 1.00 | 1.00 | 0.76 | 0.93 |
| Example 11 | 30.0% | 30.0% | 40.0% | 1.00 | 1.00 | 0.76 | 0.90 |
| Example 12 | 37.5% | 37.5% | 25.0% | 1.00 | 1.00 | 0.76 | 0.94 |
| Example 13 | 50.0% | 16.7% | 33.3% | 1.00 | 1.00 | 0.76 | 0.92 |
| Example 14 | 33.3% | 33.3% | 33.3% | 1.00 | 1.00 | 0.76 | 0.92 |
| Example 15 | 40.0% | 20.0% | 40.0% | 1.00 | 1.00 | 0.76 | 0.90 |
| Example 16 | 33.3% | 33.3% | 33.3% | 1.00 | 1.00 | 0.76 | 0.92 |
| Example 17 | 33.3% | 33.3% | 33.3% | 1.00 | 1.00 | 0.76 | 0.92 |
| Example 18 | 33.3% | 33.3% | 33.3% | 1.00 | 0.00 | 0.76 | 0.59 |
| Example 19 | 33.3% | 33.3% | 33.3% | 1.00 | 0.75 | 0.76 | 0.84 |
| Example 20 | 33.3% | 33.3% | 33.3% | 1.00 | 0.84 | 0.76 | 0.87 |
| Example 21 | 33.3% | 33.3% | 33.3% | 1.00 | 0.90 | 0.76 | 0.89 |
| Example 22 | 33.3% | 33.3% | 33.3% | 1.00 | 1.00 | 0.76 | 0.92 |
| Example 23 | 33.3% | 33.3% | 33.3% | 1.00 | 0.00 | 0.76 | 0.59 |
| Comparative Example 1 | 50.0% | - | 50.0% | 1.00 | - | 0.79 | 0.90 |
| Comparative Example 2 | 50.0% | - | 50.0% | 1.00 | - | 0.76 | 0.88 |
| Comparative Example 3 | 66.7% | - | 33.3% | 1.00 | - | 0.76 | 0.92 |
| Comparative Example 4 | 80.0% | - | 20.0% | 1.00 | - | 0.76 | 0.95 |

From consideration of the evaluation results in Table 1 and Table 2, it was confirmed that Examples within the scope of the present disclosure have both of high breakage strength and low cutting torque at a high level and are excellent in cutting machinability while maintaining high natural origin indexes as compared with Comparative Examples. And it was confirmed that Examples using a cellulose derivative (CMC ammonium) as a binding material exhibit sufficient water resistance.

### Industrial Applicability

A recycled natural material such as a recycled wood which exhibits excellent cutting machinability without losing strength and water resistance, has less impact on the environment, can be easily manufactured, and contributes to the effect of solving the problem of resource depletion is provided. By further processing the rod-shaped recycled natural material, a pencil stem (including a colored pencil lead), a wood shaft (shaft body) of a writing instrument, a wood shaft (shaft body) of a cosmetic such as a rod-shaped cosmetic such as an eyeliner, an eyebrow, and an eyeshadow can be obtained.

## Claims

1. A recycled natural material comprising at least:
an extender material comprising at least one type of powder derived from a biomass resource and having a particle size of 2 mm or less;
a machinability-improving material comprising a thermoplastic solid having a melting point of 40°C or higher; and
a binding material, wherein
a mass proportion of the extender material/the cutting improving material/the binding material is 20 to 65 / 15 to 55 / 10 to 50;
and the recycled natural material is molded into a predetermined shape.

2. The recycled natural material according to claim 1, wherein the machinability-improving material has a natural origin index defined by ISO 16128 of 50% or more.

3. The recycled natural material according to claim 1 or 2, wherein the binding material is cellulose or a cellulose derivative.

4. The recycled natural material according to claim 3, wherein the cellulose derivative is ammonium carboxymethyl cellulose.

5. A rod-shaped recycled natural material produced by molding the recycled natural material described in claim 1 or 2 into a rod shape.

6. A wood shaft for a writing instrument or a pencil, the wood shaft being produced by further processing the rod-shaped recycled natural material described in claim 5.
